# EUROPEAN PATENT SPECIFICATION

(11) **EP 3 521 701 B1**
(45) Date of publication and mention of the grant of the patent: **06.01.2021**
(21) Application number: 18382057.0
(22) Date of filing: 31.01.2018
(51) Int. Cl.: F23N 1/00, F16K 3/08

(54) **GAS COCK WITH A SAFETY VALVE FOR A GAS COOKING APPLIANCE, AND GAS COOKING APPLIANCE INCORPORATING SAID GAS COCK**
GASHAHN MIT SICHERHEITSVENTIL FÜR EIN GASKOCHGERÄT UND GASKOCHGERÄT MIT BESAGTEM GASHAHN
ROBINET À GAZ AVEC UNE SOUPAPE DE SÛRETÉ DESTINÉE À UN APPAREIL DE CUISSON AU GAZ ET APPAREIL DE CUISSON AU GAZ INTÉGRANT LEDIT ROBINET À GAZ

(43) Date of publication of application: 07.08.2019
(73) Proprietor: Copreci, S.Coop., 20550 Aretxabaleta (ES)
(72) Inventor: AYASTUY ARETXAGA, Iñaki, 20570 Bergara (ES); ARRIOLA-BENGOA UNZUETA, Imanol, 01193 Erentxun (ES)
(74) Representative: Igartua, Ismael

(56) References cited:
- EP-A1- 1 013 996
- EP-A1- 3 211 309
- EP-A2- 2 682 678
- WO-A2-2013/080116
- CN-B- 102 297 270
- CN-U- 201 866 333
- FR-A1- 2 712 963
- FR-A1- 2 765 654
- US-A- 2 963 261
- US-A1- 2015 037 740

## Description

### TECHNICAL FIELD

The present invention relates to gas cocks with a safety valve for a gas cooking appliance, and to gas cooking appliances incorporating said gas cocks.

### PRIOR ART

Gas cocks with a safety valve for a gas cooking appliance are known.

ES1087355U describes a gas cock with a magnetic safety unit for gas cookers. Said gas cock comprises a body comprising a gas inlet conduit fluidically communicated with the safety valve and at least one gas outlet conduit; a regulating element suitable for regulating the incoming gas flow from the safety valve to the outlet conduit depending on its angular position, the regulating element being arranged in a housing of the body fluidically communicated with the safety valve and with the outlet conduit; and a drive shaft coupled to the regulating element, said drive shaft being rotatable between an initial rotation position and a final rotation position, and axially moveable so as to act on a transmission element to open the safety valve.

FR2712963A1 discloses a gas tap with a safety valve for a gas burner. The gas tap comprises a body comprising a gas inlet conduit fluidically communicated with a rotating conical plug suitable for regulating the incoming gas flow from said inlet conduit. The gas tap also comprises a conduit containing a safety valve with a safety valve member, downstream of the valve member the conduit section being connected to a gas outlet orifice. The rotating conical plug is arranged in a housing of the body and it is fluidically communicated with the safety valve. The gas tap comprises a drive shaft coupled to the rotating conical plug, said drive shaft being rotatable between an initial rotation position and a final rotation position and axially moveable so as to act on a transmission element to open the safety valve. The drive shaft comprises an end that acts on the transmission element. The rotating conical plug comprises at least one connection opening for regulating gas flow depending on its angular position and a coupling hole which the drive shaft goes through, the rotating conical plug being arranged facing the transmission element.

### DISCLOSURE OF THE INVENTION

The object of the invention is to provide a gas cock with a safety valve for a gas cooking appliance, and a gas cooking appliance incorporating said gas cock, as defined in the claims.

The gas cock of the invention comprises a body comprising a gas inlet conduit fluidically communicated with the safety valve, and at least one gas outlet conduit; a regulating element suitable for regulating the incoming gas flow from the safety valve to the outlet conduit depending on its angular position, the regulating element being arranged in a housing of the body fluidically communicated with the safety valve and with the outlet conduit; and a drive shaft coupled to the regulating element, said drive shaft being rotatable between an initial rotation position and a final rotation position, and axially moveable so as to act on a transmission element to open the safety valve. The drive shaft comprises an end that acts on the transmission element.

The regulating element is a rotating disc comprising at least one connection opening for regulating the gas flow to the outlet conduit depending on its angular position, the rotating disc comprising a coupling hole which the drive shaft goes through, and said rotating disc being axially held, supported on a contact area of the housing of the body, the contact area comprising at least one outlet port fluidically communicated with the gas outlet conduit. The rotating disc is arranged facing the transmission element.

The body comprises a through hole communicated through one of its ends with the housing, the drive shaft going through the through hole and the drive shaft being rotatably fitted in said through hole.

In gas cocks with a safety valve of the prior art, the gas flow rate regulating element is a frustoconical part that is form-fitted in a housing of the body of the gas cock. The regulating element sometimes jams up when it is acted on with too much force by means of the hand-operated drive shaft since there is a large contact area between the regulating element and the body of the gas cock, such that the gas passage may remain open, causing a gas leak. By replacing the regulating element of the state of the art with a disc-shaped gas flow rate regulating element, this problem is solved since the contact area in the drive shaft pushing direction is reduced, thereby preventing a possible gas leak.

These and other advantages and features of the invention will become evident in view of the drawings and the detailed description of the invention.

### DESCRIPTION OF THE DRAWINGS

Figure 1 shows a perspective view of an embodiment of the gas cock with a safety valve of the invention with a gas outlet conduit.
Figure 2 shows another perspective view of the gas cock of Figure 1.
Figure 3 shows a perspective section view of the gas cock of Figure 1.
Figure 4 shows a front section view of the gas cock of Figure 1, with the rotating disc removed.
Figure 5 shows a perspective view of an embodiment of the rotating disc of the gas cock of Figure 1, with a connection opening in the form of a slot.
Figures 6a-c show a front section view of the gas cock of Figure 1, the gas cock being arranged in a closed gas flow regulating position (OFF), maximum gas flow regulating position (MAX) and minimum gas flow regulating position (MIN).
Figure 7 shows a perspective section view of the gas cock of Figure 1, with regulating means suitable for regulating the minimum gas flow rate, arranged going through a minimum conduit of the gas cock.
Figure 8 shows a perspective view of a second embodiment of the rotating disc, with a connection opening comprising a plurality of holes.
Figure 9 shows a perspective section view of a second embodiment of the gas cock of the invention with two gas outlet conduits, with regulating means suitable for regulating the minimum gas flow rate of the first gas outlet conduit arranged going through the minimum conduit of said first gas outlet conduit.
Figure 10 shows a perspective view of a third embodiment of the rotating disc, with two connection openings in the form of a slot.
Figure 11 shows a front section view of the gas cock of Figure 9 with the rotating disc removed, the gas cock being arranged in a maximum gas flow regulating position (MAX) in the two gas outlet conduits.
Figure 12 shows a front section view of the gas cock of Figure 9, the gas cock being arranged in a closed gas flow regulating position (OFF).
Figure 13 shows a front section view of the gas cock of Figure 9, the gas cock being arranged in a maximum gas flow regulating position (MAX) in the first gas outlet conduit and in a minimum gas flow regulating position (MIN) in the second gas outlet conduit.
Figure 14 shows a front section view of the gas cock of Figure 9, the gas cock being arranged in a maximum gas flow regulating position (MAX) in the first gas outlet conduit and in a closed gas flow regulating position (OFF) in the second gas outlet conduit.
Figure 15 shows a front section view of the gas cock of Figure 9, the gas cock being arranged in a minimum gas flow regulating position (MAX) in the first gas outlet conduit and in a closed gas flow regulating position (OFF) in the second gas outlet conduit.
Figure 16 shows a perspective view of a third embodiment of the gas cock of the invention with two gas outlet conduits.
Figure 17 shows another perspective view of the gas cock of Figure 16.
Figure 18 shows a perspective section view of the gas cock of Figure 16, with a variable-load spring pushing the rotating disc supported in a bowl.
Figure 19 shows a perspective section view of a fourth embodiment of the gas cock of the invention with two gas outlet conduits.

### DETAILED DISCLOSURE OF THE INVENTION

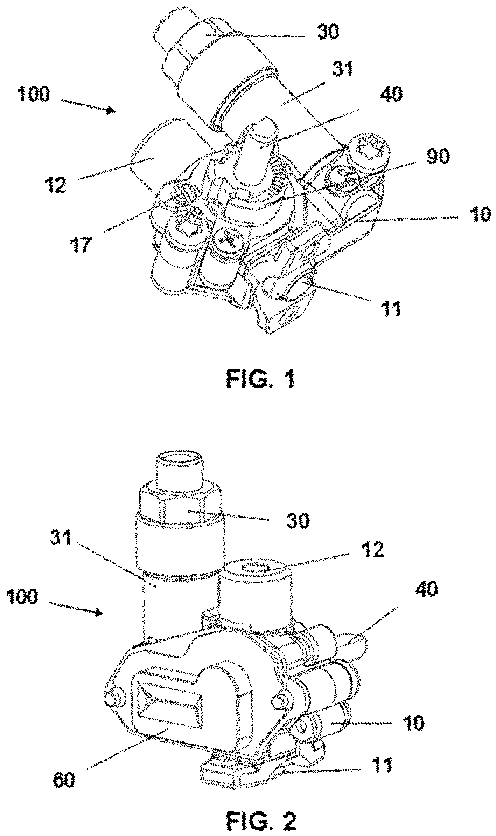

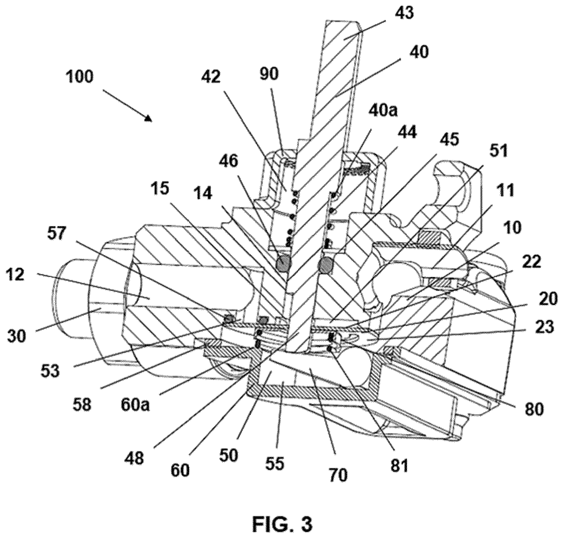

Figures 1 to 7 show an embodiment of the gas cock 100 with a safety valve 30 according to the invention, comprising a gas outlet conduit 12.

The gas cock 100 comprises a body 10 comprising a gas inlet conduit 11 which is fluidically communicated with the safety valve 30, and the gas outlet conduit 12 suitable for conducting the incoming gas to a burner (not shown in the drawings). The gas cock 100 further comprises a regulating element suitable for regulating the incoming gas flow from the safety valve 30 to the outlet conduit 12 depending on its angular position, the regulating element being arranged in a housing 51 of the body 10 which is fluidically communicated with the safety valve 30 and with the outlet conduit 12. The gas cock 100 also comprises a drive shaft 40 coupled to the regulating element, said drive shaft 40 being rotatable between an initial rotation position and a final rotation position and axially moveable so as to act on a transmission element 70 to open the safety valve 30.

In this embodiment, the regulating element is a rotating disc 20 comprising a crescent-shaped connection opening 21 for regulating the gas flow to the outlet conduit 12 depending on its angular position. In this embodiment, the rotating disc 20 comprises a D-shaped coupling hole 24 which the drive shaft 40 goes through. Said rotating disc 20 is axially held, supported on a contact area 52 of the housing 51 of the body 10, the contact area 52 comprising an outlet port 53 that is fluidically communicated with the gas outlet conduit 12.

The body 10 of the gas cock 100 comprises a through hole 14 communicated with the housing 51 through one of its ends 15, the drive shaft 40 going through the through hole 14 and the drive shaft 40 being fitted rotatably and in an axially moveable manner in said through hole 14. The drive shaft 40 comprises one end 48 that acts on the transmission element 70, and another end 43 to which a knob (not depicted) operable by the user is coupled. The end 48 is arranged in the housing 51 when the drive shaft 40 is not axially pushed, and said end 48 is coupled to the rotating disc 20 in the coupling hole 24, said coupling hole 24 allowing the axial movement of the drive shaft 40 without axially moving the rotating disc 20. The rotating disc 20 is arranged facing the transmission element 70.

One face 22 of the rotating disc 20 is supported in the contact area 52 of the housing 51 of the body 10. The contact area 52 on which the rotating disc 20 is supported comprises a planar supporting surface comprising a channel surrounding the outlet port 53, there being housed in said channel a sealing gasket 57 that is pressed on by one face 22 of the rotating disc 20 when the rotating disc 20 is supported on the contact area 52. Gas flow to the gas outlet conduit 12 is therefore regulated by rotating the rotating disc 20 and by the connection opening 21 of the rotating disc 20 overlapping the outlet port 53.

In another embodiment of the gas cock (not depicted), the contact area 52 comprises a plurality of balls secured in place. These balls rotate with respect to their own axis, and the rotating disc 20 is supported on said balls. Of course in other embodiments, instead of balls there may be other rotating elements, such as cylinders.

In this embodiment, the gas cock 100 comprises a cover 60 attached to the body 10 that sealingly closes a chamber 50 formed by the housing 51 of the rotating disc 20 and a second housing 55 arranged in the cover 60. The chamber 50 is leak-tight as a sealing gasket 58 is arranged between the cover 60 and the body 10. The second housing 55 is communicated with the safety valve 30, the transmission element 70 that acts on the safety valve 30 being housed in the second housing 55. The second housing 55 is communicated with a hole 56 that is arranged in the body 10. The hole 56 fluidically communicates with the safety valve 30. In this embodiment, the transmission element 70 is a rocker arm, and the safety valve 30 comprises a shutter 32 which closes it, such that when the drive shaft 40 is axially pushed, the end 48 pushes the transmission element 70, and this transmission element acts on the shutter 32 through the hole 56, opening the safety valve 30, where the incoming gas can go from the inlet conduit 11, through the safety valve 30, and reach the second housing 55.

The other end of the through hole 14 of the body 10 is communicated with a seat comprising an O-ring 46, the O-ring 46 being arranged surrounding the drive shaft 40 and fitted against the seat, assuring the tightness, complete tightness of the chamber 50 thereby being obtained. The seat of the O-ring 46 is covered by a plate 45, which in this embodiment is a washer coupled to the drive shaft 40 going through it, arranged on the O-ring 46. The gas cock 100 comprises a spring 44 which is arranged between the plate 45 and a stop surface 40a of the drive shaft 40. The function of said spring 44 is to return the drive shaft 40 to a rest position when said drive shaft 40 is no longer being axially pushed to open the safety valve 30. The gas cock 100 comprises a cover 90 that the drive shaft 40 goes through which closes a second chamber 42 formed between said cover 90 and the plate 45. The second chamber 42, inside of which the spring 44 is arranged, is arranged opposite the chamber 50 in reference to the body 10 of the gas cock 100 and in the direction of the drive shaft 40, both chambers 50 and 42 being separated by the through hole 14 of the body 10.

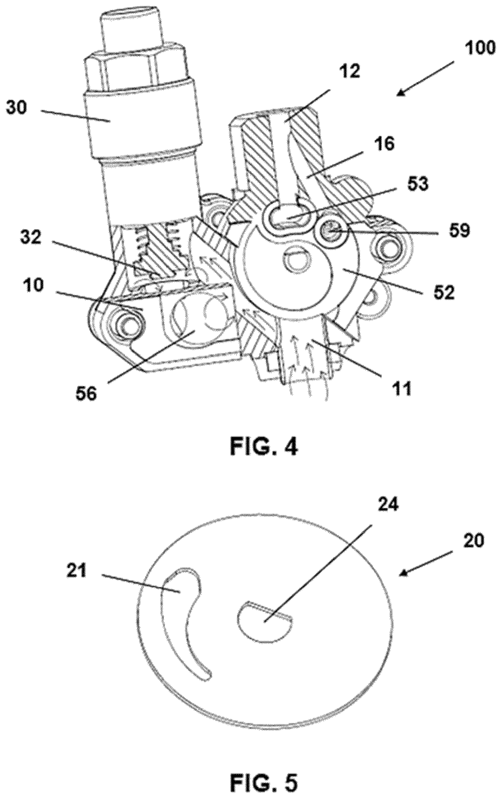

The contact area 52 in which the rotating disc 20 is supported comprises a minimum port 59 which is fluidically communicated with a corresponding minimum gas conduit 16, as shown in Figure 4, and this minimum gas conduit 16 is in turn fluidically communicated with the gas outlet conduit 12. The minimum gas flow of the gas cock 100 is regulated by rotating the rotating disc 20 and by the connection opening 21 overlapping the minimum port 59 with the rotating disc 20 in a given angular position.

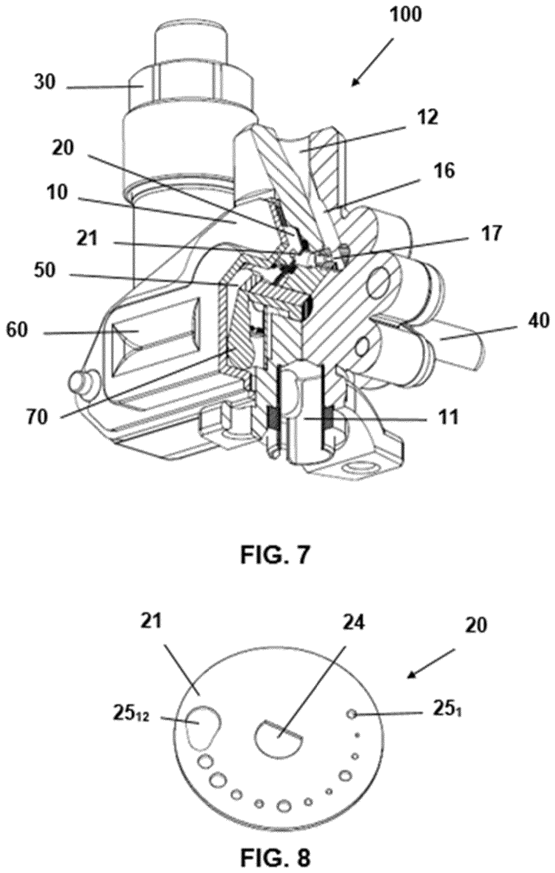

As shown in Figure 7, in this embodiment the gas cock 100 comprises regulating means 17 suitable for regulating the minimum gas flow rate. In this embodiment of the gas cock 100, the regulating means 17 consist of a screw comprising a calibrated orifice that defines the minimum gas flow rate to be regulated in said gas cock 100. The regulating means 17 are arranged in a conduit going through the minimum conduit 16, the conduit of the regulating means 17 being accessible from outside the gas cock 100, as shown in Figure 1. The head of the screw of the regulating means 17 is arranged on the outside and can be rotated with the help of a tool such that said regulating means 17 move axially. The regulating means 17 thereby allow regulating the passage of a different minimum gas flow rate depending on its position. In this embodiment, given that the connection opening 21 of the rotating disc 20 has a substantially crescent shape, the minimum gas flow rate in the gas cock 100 is more precisely regulated with the help of the regulating means 17.

The rotating disc 20 is axially held, supported on the planar surface of the contact area 52 of the housing 51 of the body 10 by means of a spring 81. This spring 81 pushes the rotating disc 20 at one of its ends, the other end of the spring 81 being supported on a supporting surface 60a arranged in the housing 51, which is parallel to the contact area 52 in which the rotating disc 20 is supported. In this embodiment of the gas cock 100, the supporting surface 60a is a side surface of the cover 60 which closes the leak-tight chamber 50 against the body 10 of the gas cock 100, the supporting surface 60a therefore being a fixed surface. This embodiment of the gas cock 100 comprises a bowl 80 which is supported on an outer face in the face 23 of the rotating disc 20 opposite face 22, where it is the end of the spring 81 that pushes the rotating disc 20 supported on the inner face of the bowl 80. The spring 81 is therefore a constant-load spring, since the axial movement axis of the drive shaft 40 does not affect the axial movement of the rotating disc 20, and therefore does not affect the spring 81. This spring 81 keeps its pressure on the rotating disc 20 constant and does not rotate when said rotating disc 20 is angularly moved.

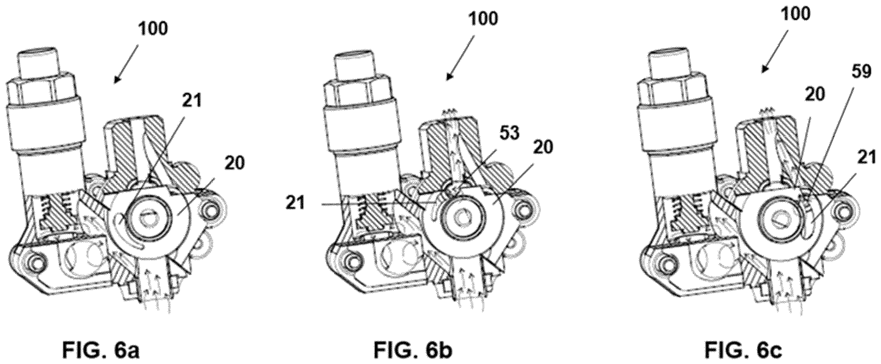

Figures 6a-c show a front section view of the gas cock 100 of Figure 1, the gas cock 100 being arranged in a closed gas flow regulating position OFF, in which the connection opening 21 of the rotating disc 20 does not overlap the outlet port 53 or the minimum port 59 of the contact area 52, a maximum gas flow regulating position MAX, in which the connection opening 21 overlaps in its widest region the outlet port 53, and a minimum gas flow regulating position MIN, in which the connection opening 21 overlaps in its narrowest region the minimum port 59.

Figure 8 shows a perspective view of a second embodiment of the rotating disc 20, with a connection opening 21 comprising twelve holes 25₁-25₁₂. In this embodiment of the rotating disc 20, the substantially crescent-shaped connection opening 21 is replaced with through holes of different diameters randomly arranged in a row. This row of holes has a radial shape, such that in order to achieve the required gas flow rate in the gas outlet conduit 12, it is regulated by a number of consecutive holes 25₁, 25₁₂ overlapping the outlet port 53 or the minimum port 59, and the gas flow is varied by means of the inlet and outlet of said holes 25₁, 25₁₂ overlapping the ends of the outlet port 53 or of the minimum port 59 at the same time. In another embodiment of the gas cock (not depicted), the regulating means 17 of the embodiment of the gas cock shown in Figures 1-7 can thereby be dispensed with, because in order to achieve the minimum gas flow rate MIN, a number of holes of the end of the row of holes starting with hole 25₁ overlap.

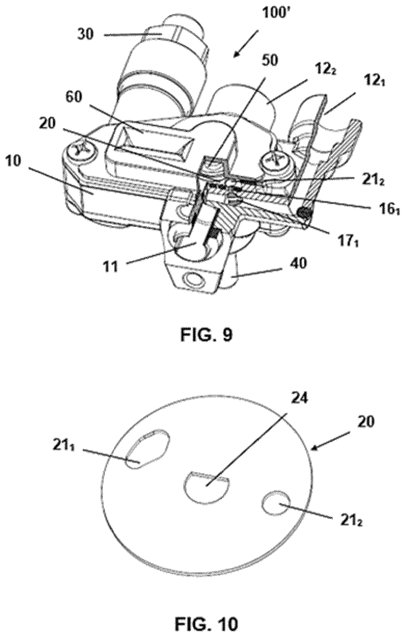

Figures 9 and 11 to 15 show a second embodiment of the gas cock 100' with a safety valve 30 according to the invention, comprising two gas outlet conduits 12₁ and 12₂. This gas cock 100' comprises the same features as the embodiment of the gas cock 100, with the difference that it comprises in the contact area 52 of the body 10 two outlet ports 53₁ and 53₂ accordingly in fluid communication with the two gas outlet conduits 12₁ and 12₂. The second embodiment of the gas cock 100' also comprises in the contact area 52 two minimum ports 59₁ and 59₂ accordingly in fluid communication with the two gas outlet conduits 12₁ and 12₂ through two minimum conduits 16₁ and 16₂. The gas outlet conduits 12₁ and 12₂ are suitable for conducting the incoming gas to a burner with two crowns, accordingly an inner crown and an outer crown (not depicted). The gas flow is regulated to the outlet conduits 12₁ and 12₂ when the outlet ports 53₁ and 53₂ or the minimum ports 59₁ and 59₂ overlap a corresponding number of connection openings 21₁ and 21₂ of the rotating disc 20. Figure 10 shows a third embodiment of the rotating disc 20 comprising two connection openings 21₁ and 21₂.

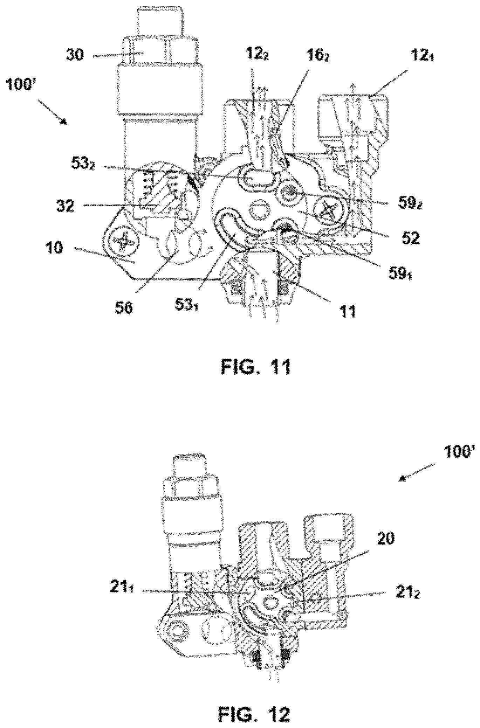

Figures 11-15 show a front section view of the gas cock 100' of Figure 9 with the rotating disc 20 removed, the gas cock 100' being arranged in different gas flow regulating positions, which correspond to different gas outlet positions in the inner crown and outer crown of the burner.

Therefore, and following the corresponding rotation of the external drive coupled to the end 43 of the drive shaft 40, Figure 12 shows the closed gas flow regulating position OFF, in which the connection openings 21₁ and 21₂ of the rotating disc 20 do not overlap the outlet ports 53₁ and 53₂ or the minimum ports 59₁ and 59₂ of the contact area 52.

Figure 11 shows the maximum gas flow regulating position MAX in the two gas outlet conduits 12₁ and 12₂, connection opening 21₁ overlapping outlet port 53₂, and connection opening 21₂ overlapping outlet port 53₁.

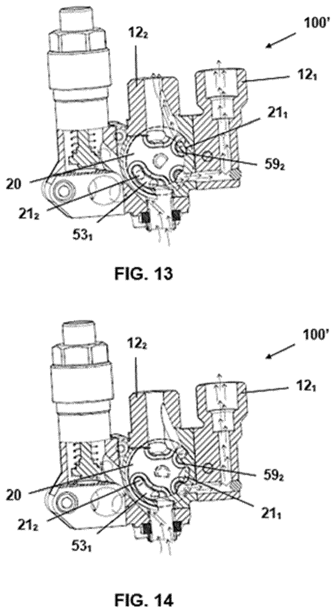

Figure 13 shows the minimum gas flow regulating position MIN in gas outlet conduit 12₂ and the maximum gas flow regulating position MAX in gas outlet conduit 12₁, connection opening 21₁ accordingly overlapping minimum port 59₂, and connection opening 21₂ accordingly overlapping outlet port 53₁.

Figure 14 shows the closed gas flow regulating position OFF in gas outlet conduit 12₂ and the maximum gas flow regulating position MAX in gas outlet conduit 12₁, connection opening 21₁ not overlapping outlet port 53₂ or minimum port 59₂, and connection opening 21₂ overlapping outlet port 53₁.

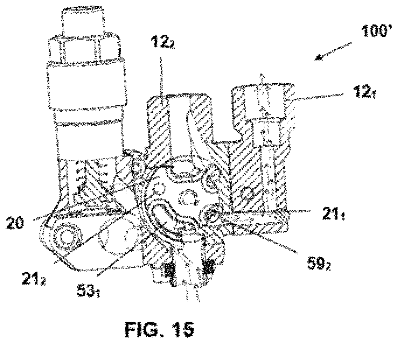

Figure 15 shows the closed gas flow regulating position OFF in gas outlet conduit 12₂ and the minimum gas flow regulating position MIN in gas outlet conduit 12₁, connection opening 21₂ not overlapping outlet port 53₂ or minimum port 59₂, and connection opening 21₁ overlapping minimum port 59₁.

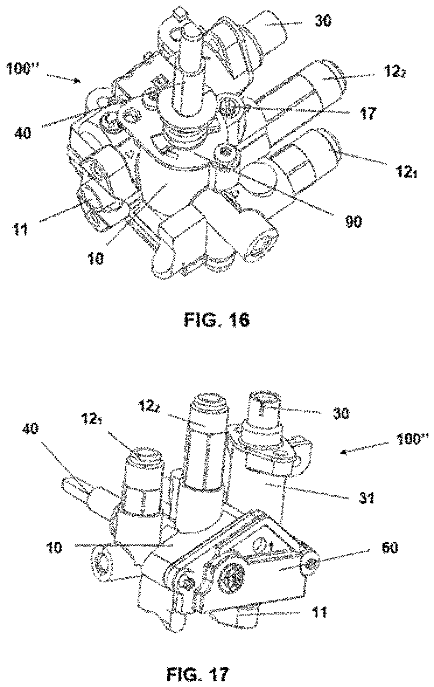

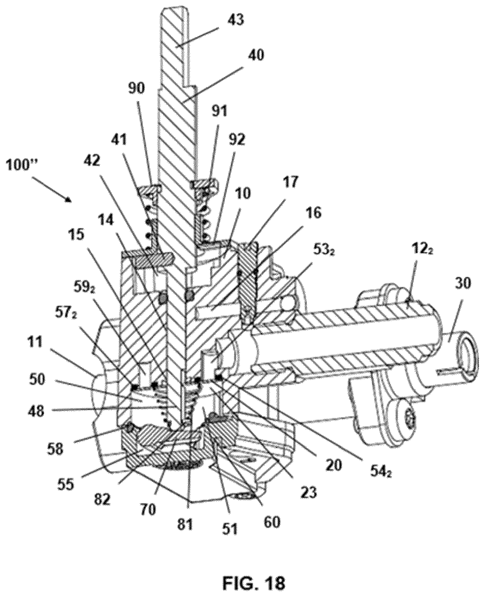

Figures 16 to 18 show a third embodiment of the gas cock 100" with a safety valve 30 according to the invention, comprising two gas outlet conduits 12₁ and 12₂. This gas cock 100" comprises the same features as the second embodiment of the gas cock 100', differing in that the spring 44 of the first and second embodiments of the gas cock 100 and 100', which is arranged between the plate 45 and a stop surface 40a of the drive shaft 40 in the second chamber 42, is replaced with a spring 91 arranged on the outside of the gas cock 100". The gas cock 100" also comprises a washer 92 which is arranged coupled in a peripheral slot of the drive shaft 40 outside the gas cock 100", one end of the spring 91 being arranged supported on the outer part of the cover 90 and the other end supported on the lower face of the washer 92. Another difference in this third embodiment of the gas cock 100" is that the rotating disc 20 is axially held, supported on the planar surface of the contact area 52 of the housing 51 of the body 10, by means of a variable-load spring 81. This spring 81 pushes the rotating disc 20 directly on its face 23 at one of its ends, the other end of the spring 81 being supported in a washer 82 which is arranged coupled to the end 48 of the drive shaft 40. When the drive shaft 40 is not being axially pushed, the spring 81 pushes the rotating disc 20 with a stronger force than when the drive shaft 40 is being axially pushed because the spring 81 moves axially with the drive shaft 40. However, the load of the spring 81 is calculated such that the spring 81 in its most extended axial position is loaded enough so as to axially hold the rotating disc supported against the contact area 52, and in its most compressed axial position, it is not loaded so that it can immobilize the rotating disc 20 in its angular movement. In this embodiment, the spring 81 rotates with the rotation of the rotating disc 20, with the bowl 80 of the gas cocks 100 and 100' of the first and second embodiments not being required.

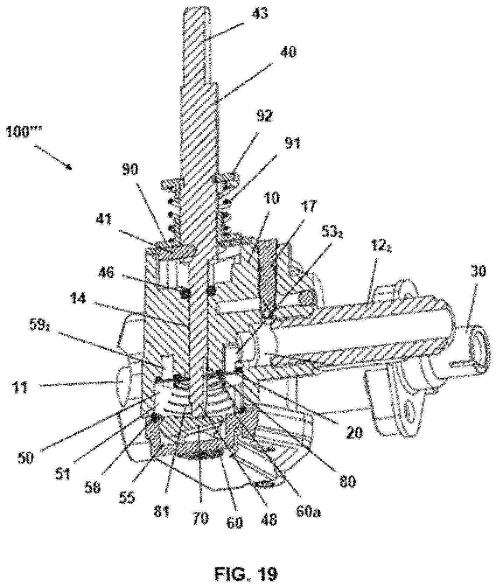

Figure 19 shows a fourth embodiment of the gas cock 100'" with a safety valve 30 of the invention, comprising two gas outlet conduits 12₁ and 12₂. It is similar to the third embodiment of the gas cock 100", with the difference being that the spring 81 is a constant-load spring, being arranged with a bowl 80, like in the first and second embodiments of the gas cock 100 and 100'. This spring 81 pushes the rotating disc 20 at one of its ends which is supported on the inner face of the bowl 80, the outer face of the bowl 80 being supported on the face 23 of the rotating disc 20. The other end of the spring 81 is supported on a side supporting surface 60a of the cover 60 arranged in the housing 51, which is parallel to the contact area 52. This spring 81 maintains its pressure on the rotating disc 20 constant and does not rotate when said rotating disc 20 is angularly moved.

## Claims

1. Gas cock with a safety valve (30) for a gas cooking appliance, comprising a body (10) comprising a gas inlet conduit (11) fluidically communicated with the safety valve (30) and at least one gas outlet conduit (12); a regulating element suitable for regulating the incoming gas flow from the safety valve (30) to the outlet conduit (12) depending on its angular position, the regulating element being arranged in a housing (51) of the body (10) fluidically communicated with the safety valve (30) and with the outlet conduit (12); and a drive shaft (40) coupled to the regulating element, said drive shaft (40) being rotatable between an initial rotation position and a final rotation position and axially moveable so as to act on a transmission element (70) to open the safety valve (30), the drive shaft (40) comprising an end (48) that acts on the transmission element (70), and the regulating element comprising at least one connection opening (21) for regulating gas flow to the outlet conduit (12) depending on its angular position and a coupling hole (24) which the drive shaft (40) goes through, the regulating element being arranged facing the transmission element (70), wherein the regulating element is a rotating disc (20), said rotating disc (20) being axially held, supported on a contact area (52) of the housing (51) of the body (10), the contact area (52) comprising at least one outlet port (53) fluidically communicated with the gas outlet conduit (12), and wherein the body (10) comprises a through hole (14) communicated through one of its ends with the housing (51), the drive shaft (40) going through the through hole (14) and the drive shaft (40) being rotatably fitted in said through hole (14).

2. Gas cock according to claim 1, wherein the other end of the through hole (14) is communicated with a seat comprising an O-ring (46) assuring tightness.

3. Gas cock according to claim 2, wherein the seat of the O-ring (46) is covered by a plate (45), and a spring (44) is arranged between said plate (45) and a stop surface (40a) of the drive shaft (40), said spring (44) returning the drive shaft (40) to a rest position when said drive shaft (40) is no longer being pushed to open the safety valve (30).

4. Gas cock according to any of claims 1 to 3, wherein the rotating disc (20) is axially held by means of a spring (81) that pushes the rotating disc (20) at one of its ends, the other end of the spring (81) being supported on a supporting surface (60a) arranged in the housing (51) which is parallel to the contact area (52) in which the rotating disc (20) is supported.

5. Gas cock according to claim 4, comprising a bowl (80) that is supported on the rotating disc (20), the end of the spring (81) that pushes the rotating disc (20) being supported on the bowl (80).

6. Gas cock according to claim 4 or 5, comprising a cover (60) attached to the body (10) that sealingly closes a chamber (50) formed by the housing (51) of the rotating disc (20) and a second housing (55) arranged in the cover (60) and communicated with the safety valve (30), the transmission element (70) that acts on the safety valve (30) being housed in the second housing (55).

7. Gas cock according to claim 6, wherein the supporting surface (60a) of the spring (81) is a surface of the cover (60) that is part of the contour defining the second housing (55).

8. Gas cock according to any of claims 1 to 3, wherein the end (48) of the drive shaft (40) comprises a washer (82), the rotating disc (20) being axially held by means of a spring (81) that pushes the rotating disc (20) at one of its ends, the other end of the spring (81) being supported in said washer (82).

9. Gas cock according to any of the preceding claims, wherein the contact area (52) of the housing (51) of the body (10) on which the rotating disc (20) is supported, comprises a planar supporting surface comprising a channel surrounding the outlet port (53), there being housed in said channel a sealing gasket (57) that is pressed on by the rotating disc (20) when the rotating disc (20) is supported on the contact area (52).

10. Gas cock according to any of the preceding claims, wherein the contact area (52) comprises a plurality of balls secured in place and rotating with respect to their own axis, the rotating disc (20) being supported on said balls.

11. Gas cock according to any of the preceding claims, wherein the contact area (52) in which the rotating disc (20) is supported comprises at least one minimum port (59), the minimum port (59) being fluidically communicated with a corresponding minimum gas conduit (16), the minimum gas flow being regulated by the connection opening (21) of the rotating disc (20) overlapping the minimum port (59) with the rotating disc (20) in a given angular position.

12. Gas cooking appliance **characterised in that** it comprises at least one gas cock according to any of the preceding claims.

## Patentansprüche

1. Gashahn mit Sicherheitsventil (30) für ein Gaskochgerät, umfassend einen Körper (10), welcher eine Gaseinlassleitung (11) in fluidischer Kommunikation mit dem Sicherheitsventil (30) und mindestens eine Gasauslassleitung (12) umfasst; ein Regelelement, welches dazu geeignet ist, den einströmenden Gasstrom vom Sicherheitsventil (30) zur Auslassleitung (12) in Abhängigkeit von der Winkelposition desselben zu regulieren, wobei das Regelelement in einem Gehäuse (51) des Körpers (10) in fluidischer Kommunikation mit dem Sicherheitsventil (30) und mit der Auslassleitung (12) angeordnet ist; und eine Antriebswelle (40), welche mit dem Regelelement gekoppelt ist, wobei die besagte Antriebswelle (40) zwischen einer anfänglichen Drehposition und einer endgültigen Drehposition drehbar ist und axial beweglich ist, um auf ein Übertragungselement (70) zum Öffnen des Sicherheitsventils (30) zu wirken, wobei die Antriebswelle (40) ein Ende (48) umfasst, welches auf das Übertragungselement (70) wirkt, und wobei das Regelelement mindestens eine Verbindungsöffnung (21) zum Regulieren des Gasstroms zur Auslassleitung (12) in Abhängigkeit von der Winkelposition desselben und ein Kopplungsloch (24), welches die Antriebswelle (40) durchdring, umfasst, wobei das Regelelement dem Übertragungselement (70) zugewandt angeordnet ist, wobei das Regelelement eine Drehscheibe (20) ist, wobei die besagte Drehscheibe (20), auf einer Kontaktfläche (52) des Gehäuses (51) des Körpers (10) gestützt, axial gehalten wird, wobei die Kontaktfläche (52) mindestens einen Auslassstutzen (53) in fluidischer Kommunikation mit der Gasauslassleitung (12) umfasst, und wobei der Körper (10) ein Durchgangsloch (14) umfasst, welches über ein dessen Enden mit dem Gehäuse (51) kommuniziert, wobei die Antriebswelle (40) das Durchgangsloch (14) durchdring und die Antriebswelle (40) im besagten Durchgangsloch (14) drehbar angepasst ist.

2. Gashahn nach Anspruch 1, wobei das andere Ende des Durchgangslochs (14) mit einer Aufnahme kommuniziert, welche einen Dichtungsring (46) umfasst, welcher eine Leckdichtheit gewährleistet.

3. Gashahn nach Anspruch 2, wobei die Aufnahme des Dichtungsrings (46) von einer Platte (45) abgedeckt ist, und eine Feder (44) zwischen der besagten Platte (45) und eine Anschlagoberfläche (40a) der Antriebswelle (40) angeordnet ist, wobei die besagte Feder (44) die Antriebswelle (40) in eine Ruheposition zurückbringt, wenn die besagte Antriebswelle (40) nicht mehr gedrückt wird, um das Sicherheitsventil (30) zu öffnen.

4. Gashahn nach einem der Ansprüche 1 bis 3, wobei die Drehscheibe (20) mittels einer Feder (81), welche die Drehscheibe (20) an einem deren Enden drückt, axial gehalten wird, wobei das andere Ende der Feder (81) auf einer im Gehäuse (51) angeordneten Stützoberfläche (60a) gestützt ist, welche parallel zur Kontaktfläche (52) ist, in welcher die Drehscheibe (20) gestützt ist.

5. Gashahn nach Anspruch 4, umfassend eine Schale (80), welche auf der Drehscheibe (20) gestützt ist, wobei das Ende der Feder (81), welche die Drehscheibe (20) drückt, auf der Schale (80) gestützt ist.

6. Gashahn nach Anspruch 4 oder 5, umfassend eine Abdeckung (60), welche am Körper (10) befestigt ist und eine Kammer (50) dichtend schließt, welche vom Gehäuse (51) der Drehscheibe (20) und einem zweiten Gehäuse (55), welches in der Abdeckung (60) angeordnet ist und mit dem Sicherheitsventil (30) kommuniziert, gebildet ist, wobei das Übertragungselement (70), welches auf das Sicherheitsventil (30) wirkt, im zweiten Gehäuse (55) aufgenommen ist.

7. Gashahn nach Anspruch 6, wobei die Stützoberfläche (60a) der Feder (81) eine Oberfläche der Abdeckung (60) ist, welche Bestandteil der Kontur ist, welche das zweite Gehäuse (55) definiert.

8. Gashahn nach einem der Ansprüche 1 bis 3, wobei das Ende (48) der Antriebswelle (40) eine Unterlegscheibe (82) umfasst, wobei die Drehscheibe (20) mittels einer Feder (81), welche die Drehscheibe (20) an einem deren Enden drückt, axial gehalten wird, wobei das andere Ende der Feder (81) in der besagten Unterlegscheibe (82) gestützt ist.

9. Gashahn nach einem der vorhergehenden Ansprüche, wobei die Kontaktfläche (52) des Gehäuses (51) des Körpers (10), auf welcher die Drehscheibe (20) gestützt ist, eine ebene Stützoberfläche umfasst, welche einen Kanal umfasst, welcher den Auslassstutzen (53) umgibt, wobei im besagten Kanal eine Dichtungsplatte (57) aufgenommen ist, auf welcher Druck von der Drehscheibe (20) ausgeübt wird, wenn die Drehscheibe (20) auf der Kontaktfläche (52) gestützt ist.

10. Gashahn nach einem der vorhergehenden Ansprüche, wobei die Kontaktfläche (52) eine Vielzahl von Kugeln umfasst, welche an der Stelle gesichert sind und sich in Bezug auf deren eigene Achse drehen, wobei die Drehscheibe (20) auf den besagten Kugeln gestützt ist.

11. Gashahn nach einem der vorhergehenden Ansprüche, wobei die Kontaktfläche (52), in welcher die Drehscheibe (20) gestützt ist, mindestens einen minimalen Stutzen (59) umfasst, wobei der minimale Stutzen (59) in fluidischer Kommunikation mit einer entsprechenden minimalen Gasleitung (16) ist, wobei der minimale Gasstrom von der Verbindungsöffnung (21) der Drehscheibe (20) reguliert wird, indem der minimale Stutzen (59) mit der Drehscheibe (20) in einer gegebenen Winkelposition überlappt wird.

12. Gaskochgerät, **dadurch gekennzeichnet, dass** es mindestens einen Gashahn nach einem der vorhergehenden Ansprüche umfasst.

## Revendications

1. Robinet à gaz avec une soupape de sûreté (30) destiné à un appareil de cuisson au gaz, comprenant un corps (10) comprenant une conduite d'entrée de gaz (11) communiquée de manière fluidique avec la soupape de sûreté (30) et au moins une conduite de sortie de gaz (12) ; un élément de régulation apte à réguler le débit de gaz entrant depuis la soupape de sûreté (30) à la conduite de sortie (12) en fonction de sa position angulaire, l'élément de régulation étant aménagé dans un logement (51) du corps (10) communiqué de manière fluidique avec la soupape de sûreté (30) et avec la conduite de sortie (12), et un arbre d'entraînement (40) couplé avec l'élément de régulation, ledit arbre d'entraînement (40) pouvant tourner entre une position de rotation initiale et une position de rotation finale et étant axialement déplaçable de manière à agir sur un élément de transmission (70) pour ouvrir la soupape de sûreté (30), l'arbre d'entraînement (40) comprenant une extrémité (48) qui agit sur l'élément de transmission (70), et l'élément de régulation comprenant au moins une ouverture de connexion (21) pour réguler le débit de gaz vers la conduite de sortie (12) en fonction de sa position angulaire et un trou de couplage (24) que l'arbre d'entraînement (40) traverse, l'élément de régulation étant aménagé en regard de l'élément de transmission (70), dans lequel l'élément de régulation est un disque rotatif (20), ledit disque rotatif (20) étant retenu axialement, supporté sur une zone de contact (52) du logement (51) du corps (10), la zone de contact (52) comprenant au moins un orifice de sortie (53) communiqué de manière fluidique avec la conduite de sortie de gaz (12), et dans lequel le corps (10) comprend un trou traversant (14) communiqué à travers une de ses extrémités avec le logement (51), l'arbre d'entraînement (40) traversant le trou traversant (14) et l'arbre d'entraînement (40) étant ajusté de manière rotative dans ledit trou traversant (14).

2. Robinet à gaz selon la revendication 1, dans lequel l'autre extrémité du trou traversant (14) est communiquée avec un siège comprenant un joint torique (46) assurant l'étanchéité.

3. Robinet à gaz selon la revendication 2, dans lequel le siège du joint torique (46) est couvert d'une plaque (45), et un ressort (44) est aménagé entre ladite plaque (45) et une surface de butée (40a) de l'arbre d'entraînement (40), ledit ressort (44) retournant l'arbre d'entraînement (40) à une position de repos lorsque ledit arbre d'entraînement (40) n'est plus poussé pour ouvrir la soupape de sûreté (30).

4. Robinet à gaz selon l'une quelconque des revendications 1 à 3, dans lequel le disque rotatif (20) est retenu axialement par le biais d'un ressort (81) qui pousse le disque rotatif (20) à une de ses extrémités, l'autre extrémité du ressort (81) étant supportée sur une surface de support (60a) aménagée dans le logement (51) qui est parallèle à la zone de contact (52) dans laquelle est supporté le disque rotatif (20).

5. Robinet à gaz selon la revendication 4, comprenant une cuvette (80) qui est supportée sur le disque rotatif (20), l'extrémité du ressort (81) qui pousse le disque rotatif (20) étant supportée sur la cuvette (80).

6. Robinet à gaz selon la revendication 4 ou 5, comprenant un couvercle (60) fixé au corps (10) qui ferme hermétiquement une chambre (50) formée par le logement (51) du disque rotatif (20) et un second logement (55) aménagé dans le couvercle (60) et communiqué avec la soupape de sûreté (30), l'élément de transmission (70) qui agit sur la soupape de sûreté (30) étant logé dans le second logement (55).

7. Robinet à gaz selon la revendication 6, dans lequel la surface de support (60a) du ressort (81) est une surface du couvercle (60) qui fait partie du contour définissant le second logement (55).

8. Robinet à gaz selon l'une quelconque des revendications 1 à 3, dans lequel l'extrémité (48) de l'arbre d'entraînement (40) comprend une rondelle (82), le disque rotatif (20) étant retenu axialement par le biais d'un ressort (81) qui pousse le disque rotatif (20) à une de ses extrémités, l'autre extrémité du ressort (81) étant supportée dans ladite rondelle (82).

9. Robinet à gaz selon l'une quelconque des revendications précédentes, dans lequel la zone de contact (52) du logement (51) du corps (10) sur laquelle est supporté le disque rotatif (20), comprend une surface de support plane comprenant un canal entourant l'orifice de sortie (53), un joint d'étanchéité (57), qui est pressé par le disque rotatif (20) lorsque le disque rotatif (20) est supporté sur la zone de contact (52), étant logé dans ledit canal.

10. Robinet à gaz selon l'une quelconque des revendications précédentes, dans lequel la zone de contact (52) comprend une pluralité de billes maintenues en place et tournant par rapport à leur propre axe, le disque rotatif (20) étant supporté sur lesdites billes.

11. Robinet à gaz selon l'une quelconque des revendications précédentes, dans lequel la zone de contact (52) dans laquelle est supporté le disque rotatif (20) comprend au moins un orifice minimum (59), l'orifice minimum (59) étant communiqué de manière fluidique avec une conduite de gaz minimum correspondante (16), le débit de gaz minimum étant régulé par l'ouverture de connexion (21) du disque rotatif (20) chevauchant l'orifice minimum (59) avec le disque rotatif (20) dans une position angulaire donnée.

12. Appareil de cuisson au gaz, **caractérisé en ce qu'il** comprend au moins un robinet à gaz selon l'une quelconque des revendications précédentes.
